# EUROPEAN PATENT APPLICATION

(11) **EP 2 623 867 A1**
(43) Date of publication of application: **07.08.2013**
(21) Application number: 12194222.1
(22) Date of filing: 26.11.2012
(51) Int. Cl.: F23R 3/14, F23R 3/28, F23C 7/00

(54) **Fuel Nozzle for a Gas Turbine Engine and Method of Operating the Same**

(30) Priority: 31.01.2012 US 201213362124
(71) Applicant: General Electric Company, Schenectady, New York 12345 (US)
(72) Inventor: Boespflug, Matthew Patrick, Niskayuna, NY New York 12309 (US); Saddoughi, Seyed Gholamali, Niskayuna, NY New York 12309 (US); Bennett, Grover Andrew, Niskayuna, NY New York 12309 (US); Herbon, John Thomas, Niskayuna, NY New York 12309 (US)
(74) Representative: Cleary, Fidelma

(57) **Abstract**

A fuel nozzle assembly (118) for use with a turbine engine includes at least one fuel conduit (212/216) coupled to at least one fuel source. The fuel nozzle assembly also includes at least one swirler (222) that includes at least one wall (230) having a porous portion (234/236). The at least one wall is coupled to the at least one fuel conduit. The porous portion is formed from a material (300) having a porosity that facilitates fuel flow (246/248) therethrough. At least one fuel flow path is thereby defined through the porous portion of the at least one wall.

## Description

### BACKGROUND OF THE INVENTION

The field of the invention relates generally to rotating machines and, more particularly, to turbine engine fuel nozzle assemblies.

At least some known turbine engines ignite a fuel-air mixture in a combustor to generate combustion gases that are channeled towards a turbine via a hot gas path. Known combustor assemblies include fuel nozzles that channel fuel to a combustion region of the combustor. The turbine converts thermal energy of the combustion gas stream to mechanical energy used to rotate a turbine shaft. Output of the turbine may be used to power a machine, for example, an electric generator, a compressor, or a pump.

Such known fuel nozzles are configured to inject and distribute a particular fuel blend to produce a predetermined flow rate through existing injection openings and jets defined within the fuel nozzles. Such known fuel nozzles are statically configured and include no features to respond to dynamic conditions, e.g., varying fuel heat content, fuel viscosities, and volumetric flow rates. If an owner/operator desires to switch fuels, the owner/operator will remove the turbine engine from service and replace the nozzles with alternative nozzles to accommodate long-term fuel switching. In some gas turbine fuel systems, fuel flow adjustment devices, e.g., adjustable fuel flow throttle valves, are positioned upstream of the fuel nozzles. In some other gas turbine fuel systems, multiple fuel supply circuits are installed. Both solutions facilitate accommodating fuel switching on the fly. However, these two solutions also increase the costs of installation and operation of the associated fuel systems.

### BRIEF SUMMARY OF THE INVENTION

In one aspect, a fuel nozzle assembly for use with a turbine engine is provided. The fuel nozzle assembly includes at least one fuel conduit coupled to at least one fuel source. The fuel nozzle assembly also includes at least one swirler that includes at least one wall having a porous portion. The at least one wall is coupled to the at least one fuel conduit. The porous portion is formed from a material having a porosity that facilitates fuel flow therethrough. At least one fuel flow path is thereby defined through the porous portion of the at least one wall.

In a further aspect, a method of operating a turbine engine is provided. The turbine engine includes at least one fuel conduit coupled to at least one fuel nozzle that includes at least one swirler having at least one porous portion. The porous portion covers at least a portion of the at least one fuel conduit opening. The porous portion is formed from a material having a porosity that facilitates fuel flow therethrough. The method includes channeling a fuel from at least one fuel source to the at least one fuel conduit. The method also includes channeling the fuel through the at least one porous portion into a combustor.

In another aspect, a gas turbine engine is provided. The gas turbine engine includes at least one combustor and at least one fuel nozzle assembly coupled to the at least one combustor. The at least one fuel nozzle assembly includes at least one fuel conduit coupled to at least one fuel source. The at least one fuel nozzle assembly also includes at least one swirler including at least one wall having a porous portion. The porous portion is formed from a material having a porosity that facilitates fuel flow therethrough. The at least one wall is coupled to the at least one fuel conduit, thereby defining at least one fuel flow path through the porous portion of the at least one wall.

### BRIEF DESCRIPTION OF THE DRAWINGS

Embodiments of the present invention will now be described, by way of example only, with reference to the accompanying drawings in which:
FIG. 1 is schematic diagram of an exemplary gas turbine engine;
FIG. 2 is a cross-sectional view of a fuel nozzle assembly that may be used with the gas turbine engine shown in FIG. 1;
FIG. 3 is an enlarged cross-sectional view of a swirler vane that may be used with the fuel nozzle assembly shown in FIG. 2 and taken along line 3-3;
FIG. 4 is an enlarged planform view of the swirled vane shown in FIG. 3 with a portion of an exemplary porous material that may be used with the fuel nozzle assembly shown in FIG. 2; and
FIG. 5 is a flow chart of an exemplary method of operating the gas turbine engine shown in FIG. 1.

Unless otherwise indicated, the drawings provided herein are meant to illustrate key inventive features of the invention. These key inventive features are believed to be applicable in a wide variety of systems comprising one or more embodiments of the invention. As such, the drawings are not meant to include all conventional features known by those of ordinary skill in the art to be required for the practice of the invention.

### DETAILED DESCRIPTION OF THE INVENTION

In the following specification and the claims, reference will be made to a number of terms, which shall be defined to have the following meanings.

The singular forms "a", "an", and "the" include plural references unless the context clearly dictates otherwise.

"Optional" or "optionally" means that the subsequently described event or circumstance may or may not occur, and that the description includes instances where the event occurs and instances where it does not.

Approximating language, as used herein throughout the specification and claims, may be applied to modify any quantitative representation that could permissibly vary without resulting in a change in the basic function to which it is related. Accordingly, a value modified by a term or terms, such as "about" and "substantially", are not to be limited to the precise value specified. In at least some instances, the approximating language may correspond to the precision of an instrument for measuring the value. Here and throughout the specification and claims, range limitations may be combined and/or interchanged, such ranges are identified and include all the sub-ranges contained therein unless context or language indicates otherwise.

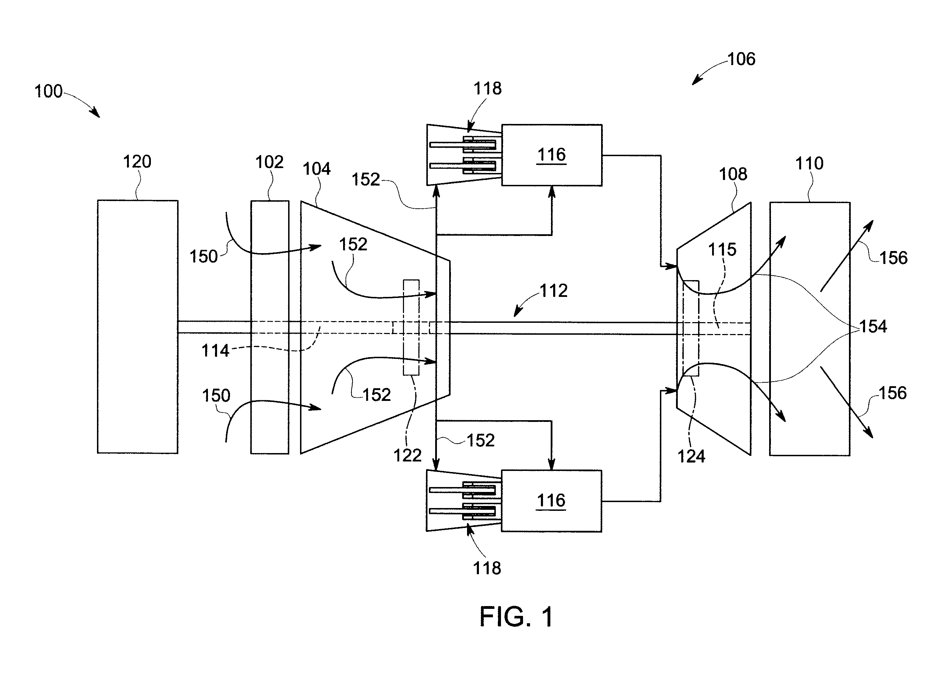

FIG. 1 is a schematic view of a rotary machine 100, i.e., a turbomachine, and more specifically, a gas turbine engine. In the exemplary embodiment, gas turbine engine 100 includes an air intake section 102, and a compressor section 104 that is coupled downstream from, and in flow communication with, intake section 102. A combustor section 106 is coupled downstream from, and in flow communication with, compressor section 104, and a turbine section 108 is coupled downstream from, and in flow communication with, combustor section 106. Turbine engine 100 includes an exhaust section 110 that is downstream from turbine section 108. Moreover, in the exemplary embodiment, turbine section 108 is coupled to compressor section 104 via a rotor assembly 112 that includes, without limitation, a compressor rotor, or drive shaft 114 and a turbine rotor, or drive shaft 115.

In the exemplary embodiment, combustor section 106 includes a plurality of combustor assemblies, i.e., combustors 116 that are each coupled in flow communication with compressor section 104. Combustor section 106 also includes at least one fuel nozzle assembly 118. Each combustor 116 is in flow communication with at least one fuel nozzle assembly 118. Moreover, in the exemplary embodiment, turbine section 108 and compressor section 104 are rotatably coupled to a load 120 via drive shaft 114. For example, load 120 may include, without limitation, an electrical generator and/or a mechanical drive application, e.g., a pump. Alternatively, gas turbine engine 100 may be an aircraft engine. In the exemplary embodiment, compressor section 104 includes at least one compressor blade assembly 122. Also, in the exemplary embodiment, turbine section 108 includes at least one turbine blade, i.e., bucket 124. Each compressor blade assembly 122 and each turbine bucket 124 is coupled to rotor assembly 112, or, more specifically, compressor drive shaft 114 and turbine drive shaft 115.

In operation, air intake section 102 channels air 150 towards compressor section 104. Compressor section 104 compresses inlet air 150 to higher pressures and temperatures prior to discharging compressed air 152 towards combustor section 106. Compressed air 152 is channeled to fuel nozzle assembly 118, mixed with fuel (not shown), and burned within each combustor 116 to generate combustion gases 154 that are channeled downstream towards turbine section 108. Combustion gases 154 generated within combustors 116 are channeled downstream towards turbine section 108. After impinging turbine bucket 124, thermal energy is converted to mechanical rotational energy that is used to drive rotor assembly 112. Turbine section 108 drives compressor section 104 and/or load 120 via drive shafts 114 and 115, and exhaust gases 156 are discharged through exhaust section 110 to ambient atmosphere.

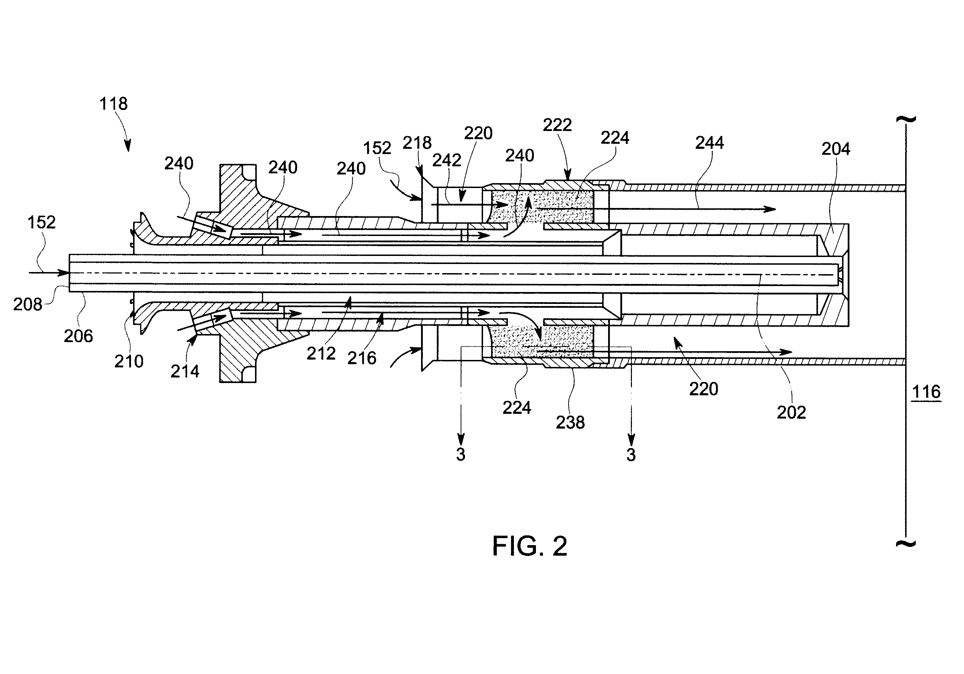

FIG. 2 is a cross-sectional view of fuel nozzle assembly 118 that may be used with the gas turbine engine 100 (shown in FIG. 1). Fuel nozzle assembly 118 defines an axial centerline 202 extending therethrough. In the exemplary embodiment, fuel nozzle assembly 118 includes a centerbody 204. An air cartridge 206 is radially disposed about axial centerline 202 and axially extends from a cooling/purge air connection 208 to the tip of centerbody 204. Air cartridge 206 at least partially defines a diffusion fuel port 210 and a diffusion fuel conduit 212. Fuel nozzle assembly 118 also defines at least one main premix fuel port 214 and at least one main premix fuel conduit 216. Fuel nozzle assembly 118 also defines at least one main air port 218 and at least one main air conduit 220. Diffusion fuel conduit 212 annularly extends around, and is radially outboard of, air cartridge 206. Main premix fuel conduits 216 are disposed within assembly 118 such that they annularly extend around, and are radially outboard of, diffusion fuel conduit 212. Main air conduits 220 are disposed within assembly 118 such that they annularly extend around, and are radially outboard of, main premix fuel conduits 216.

Also, in the exemplary embodiment, fuel nozzle assembly 118 includes a swirler 222. Swirler 222 includes a plurality of vanes 224 disposed within main air conduit 220. Swirler vanes 224 are coupled in flow communication with main premix fuel conduit 216.

Further, in the exemplary embodiment, diffusion fuel port 210, diffusion fuel conduit 212, main premix fuel port 214, and main premix fuel conduit 216 are coupled in flow communication with a plurality of gaseous fuel sources (none shown) to enable one or more gaseous fuels to be selectively channeled to fuel nozzle assembly. In the exemplary embodiment, the fuels are a carbonaceous gas such as, but not limited to, a natural gas and a syngas. Alternatively, the fuels supplied to fuel nozzle assembly 118 may be any gaseous fuels that enable operation of fuel nozzle assembly 118 and gas turbine engine 100 as described herein.

Moreover, in the exemplary embodiment, fuel nozzle assembly 118 is coupled in flow communication with a cooling/purge air source (not shown) via cooling/purge air connection 208. The cooling/purge air source may include a portion of pressurized air 152 channeled from compressor section 104 (shown in FIG. 1) and/or an independent source such as, but not limited to, an atomizing air tank and/or an auxiliary industrial air system. Fuel nozzle assembly 118 is also coupled in flow communication with compressor section 104 and receives a significant portion of pressurized air 152.

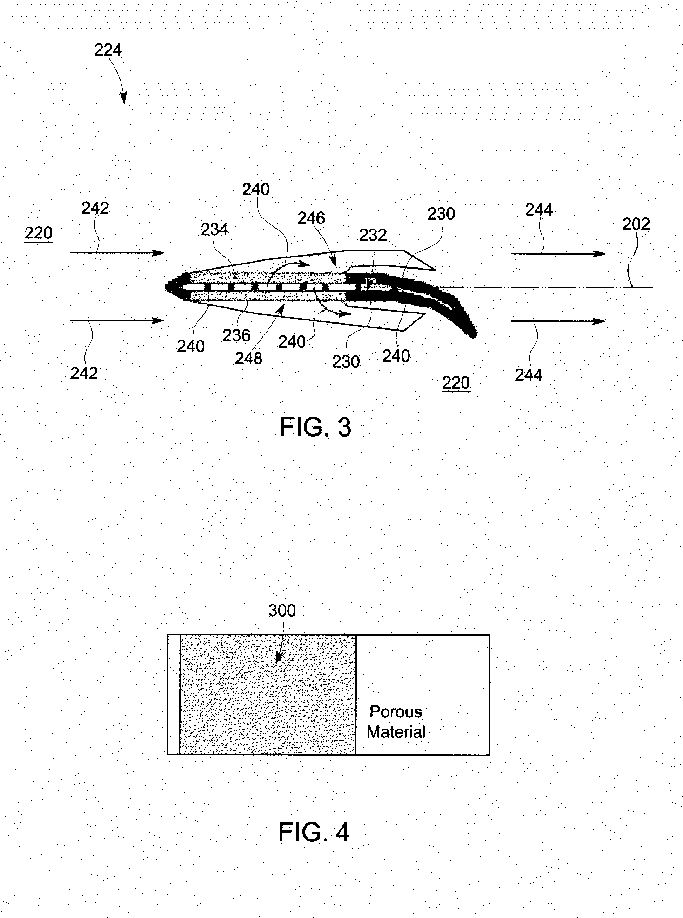

FIG. 3 is an enlarged cross-sectional view of swirler vane 224 that may be used with fuel nozzle assembly 118 (shown in FIG. 2) and taken along line 3-3 (shown in FIG. 2). In the exemplary embodiment, swirler vane 224 includes a plurality of vane walls 230 coupled to each other to define a vane cavity 232 that is coupled in flow communication with, and extends radially from, main premix fuel conduit 216 (shown in FIG. 2).

Also, in the exemplary embodiment, at least one portion of vane walls 230, i.e., at least one of portions 234 and 236 of vane walls 230, are formed from a porous material. In the exemplary embodiment, both portions 234 and 236 are porous. Specifically, portions 234 and 236 of vane walls 230 are formed from a material having a predetermined porosity that facilitates fuel flow therethrough, i.e., facilitates fuel effusion into main air conduit 220. Alternatively, only one of portions 234 and 236 are porous. Also, alternatively, other predetermined portions of vane walls 230 are formed from a porous material, either with or without porous portions 234 and 236.

Further, in the exemplary embodiment, each of porous portions 234 and 236 have a predetermined porosity value that is substantially constant radially and axially. Alternatively, each of porous portions 234 and 236 may have dissimilar predetermined porosity values that vary radially, axially, and with respect to each other.

Moreover, in the exemplary embodiment, porous portions 234 and 236 are directly opposite each other in an orientation that is parallel to axial centerline 202 (shown in FIG. 3 for reference). Porous portions 234 and 236 extend radially outward from main premix fuel conduit 216 to a casing portion 238 of swirler 222 (all shown in FIG. 2).

FIG. 4 is an enlarged planform view of swirler vane 224 (shown in FIG. 3) with a portion of an exemplary porous material 300 that may be used with swirler vanes 224 of fuel nozzle assembly 118 (shown in FIG. 2). Porous material 300 is at least one of a porous sintered ceramic, e.g. without limitation, aluminum oxide (AL₂O₃) and silicon carbide (SiC), or a sintered metal, e.g., without limitation, martensitic stainless steel, titanium, nickel, Monel^{®}, Hastelloy^{®}, and Inconel^{®}.

Porous material 300 is formed to define a predetermined porosity, or void fraction, as a measure of the void spaces in material 300, i.e., a fraction of the volume of voids over the total volume, between 0 and 1, or as a percentage, between 0 and 100%. In the exemplary embodiment, the void fraction is within a range of approximately 20% to approximately 70%. Alternatively, the void fraction is any value that enables operation of fuel nozzle assembly 118 and gas turbine engine 100 (shown in FIG. 1) as described herein. Also, in the exemplary embodiment, the mean pore size in porous material 300 ranges from approximately 250 microns to approximately 1,000 microns. Therefore, the permeability of porous material 300 is predetermined for each of porous portions 234 and 236 (both shown in FIG. 3) to define predetermined flow rates at predetermined pressures for predetermined fuels. Further, as discussed above for porosity, each of porous portions 234 and 236 have a predetermined permeability value that is substantially constant radially and axially. Alternatively, each of porous portions 234 and 236 may have dissimilar predetermined permeability values that vary radially, axially, and with respect to each other.

Referring to FIG. 2, in operation, gaseous fuel 240 is axially channeled from at least one external gas fuel source into main premix fuel conduit 216 through main premix fuel port 214. Fuel 240 is axially channeled through main premix fuel conduit 216 to swirler 222, wherein fuel 240 is channeled radially outward through swirler 222, and is injected into main air conduit 220. Air 152 is channeled into main air conduit 220 through main air port 218 to form air stream 242. Air stream 242 is channeled toward swirler 222, wherein air stream 242 and fuel 240 are mixed to form fuel/air stream 244 that is channeled to combustor 116.

Referring to FIG. 3, in operation, gaseous fuel 240 (shown as small squares in FIG. 3) is channeled radially outward from main premix fuel conduit 216 toward casing portion 238 of swirler 222 (all shown in FIG. 2) through vane cavity 232. Fuel 240 effuses out of opposing porous portions 234 and 236 into main air conduit 220 to form predetermined fuel streams 246 and 248 for predetermined fuels. Fuel streams 246 and 248 and air stream 242 are mixed to form fuel/air stream 244 that is channeled to combustor 116 (shown in FIG. 2).

In the exemplary embodiment, the predetermined porosity values of opposing porous portions 234 and 236 facilitate decreasing the formation of concentrated jets of fuel being injected into main air conduit 220 with fuels having different BTU values. Furthermore, reliance of fuel nozzle assemblies 118 (shown in FIGs. 1 and 2) on jet-in-crossflow mixing prior to channeling fuel into combustors 116 (shown in FIGs. 1 and 2) is decreased. Since different fuel blends require different flow rates in gas turbine engine 100 (shown in FIG. 1), the porosity values of porous portions 234 and 236 facilitate the variability of fuel flow rates for different fuels due to the diffusive nature of porous material 300. Therefore, fuel nozzle assemblies 118 and porous portions 234 and 236 facilitate effective combustion of a wide range of fuels without maintenance outages to modify fuel nozzle assemblies 118 and upstream fuel conduits (not shown).

For at least some fuels, the characteristics of fuel injection into gas turbine engine 100 is more consistent to reduce effects induced by higher and lower differential pressures, varying viscosities, and pressure drops in the fuel flow paths. Also, the natural flow-restrictive features of porous material 300 facilitate a predetermined distribution of the fuel into main air conduit 220 within predetermined tolerances, including, without limitation, a substantially even distribution. Control of flow rates by use of fuel control devices upstream of, and external to, gas turbine engine 100 facilitates maintaining the fuel backpressure within predetermined ranges for each fuel. Moreover, in addition to control of fuel flow rates, effects from undesirable conditions such as fuel flow imbalances between multiple fuel nozzles 118 (shown in FIG. 1), burning fuels with out-of-specification characteristics, and out-of-tolerance distribution profiles at swirler vanes 224 are reduced.

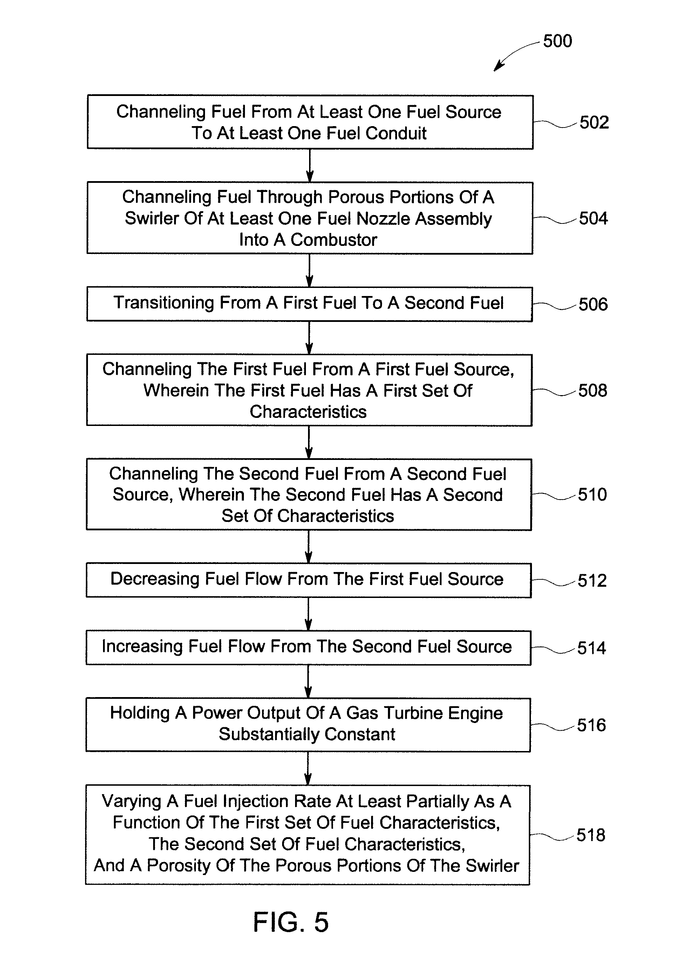

FIG. 5 is a flow chart of an exemplary method 500 of operating gas turbine engine 100 (shown in FIG. 1). Fuel 240 (shown in FIG. 2) from at least one fuel source is channeled 502 to at least one fuel conduit, i.e., main premix fuel conduit (shown in FIG. 2). Fuel 240 is channeled 504 through porous portions 234 and 236 (both shown in FIG. 2) of swirler 222 (shown in FIG. 2) of at least one fuel nozzle 216 (shown in FIG. 2) into combustor 116 (shown in FIG. 2). Porous portions 234 and 236 are formed from material 300 (shown in FIG. 4) having a predetermined porosity that facilitates fuel flow 240 therethrough.

Method 500 also includes transitioning 506 from a first fuel to a second fuel. The first fuel is channeled 508 from a first fuel source, wherein the first fuel has a first set of characteristics. The second fuel is channeled 510 from a second fuel source, wherein the second fuel has a second set of characteristics. Fuel flow from the first fuel source is decreased 512. Fuel flow from the second fuel source is increased 514. A power output of gas turbine engine 100 is held 516 substantially constant by varying 518 a fuel injection rate at least partially as a function of the first set of fuel characteristics, the second set of fuel characteristics, and a porosity of porous portions 234 and 236.

The percentages of the first and second fuels channeled into combustor 116 through porous portions 234 and 236 of swirler vanes 224 varies within a range extending between 0% and 100%. Also, fuel blends burned within combustor 116 are not limited to two different fuels.

The above-described fuel nozzle assembly provides a cost-effective method for increasing reliability and decreasing disruptions of operation of gas turbine engines. Specifically, the devices, systems, and methods described herein provide swirler vane walls of fuel nozzle assemblies having predetermined porosity values that facilitate switching fuels and modulating components of fuel blends on the fly. The devices, systems, and methods described herein decrease fuel injection variation and challenges with discrete concentrated jets when utilizing fuels having different BTU values. Furthermore, the devices, systems, and methods described herein decrease a reliance of the fuel nozzle assemblies on jet-in-crossflow mixing prior to channeling the fuel into the associated combustors. Moreover, the devices, systems, and methods described herein facilitate the variability of fuel flow rates for different fuels, regardless of different fuel blends requiring different flow rates, due to the predetermined porosity values of the swirler vane walls and the diffusive nature of the porous material.

Furthermore, the devices, systems, and methods described herein facilitate effective combustion of a wide range of fuels without maintenance outages to modify the fuel nozzle assemblies and the upstream fuel conduits. The devices, systems, and methods described herein facilitate, for at least some fuels, controlling the effects of the varying characteristics of fuel injection into a gas turbine engine, i.e., making the characteristics of fuel injection more consistent to reduce effects induced by higher and lower differential pressures, varying viscosities, and pressure drops in the fuel flow paths. Also, the devices, systems, and methods described herein facilitate using the natural flow-restrictive features of the porous material to provide for a predetermined distribution of fuel. Furthermore, the devices, systems, and methods described herein facilitate controlling the fuel flow rates by use of fuel control devices upstream of, and external to, a gas turbine engine to facilitate maintaining the fuel backpressure within predetermined ranges for each fuel. Moreover, in addition to control of fuel flow rates, effects from undesirable conditions such as fuel flow imbalances, burning fuels with out-of-specification characteristics, and out-of-tolerance distribution profiles are reduced.

An exemplary technical effect of the methods, systems, and apparatus described herein includes at least one of: (a) increasing reliability and decreasing disruptions of operation of gas turbine engines while switching fuels on the fly and modulating components of fuel blends; (b) providing swirler vane walls of fuel nozzle assemblies having predetermined porosity values that facilitate decreasing fuel injection variation and challenges with discrete concentrated jets when utilizing fuels having different BTU values; (c) providing swirler vane walls of fuel nozzle assemblies having predetermined porosity values that facilitate decreasing a reliance of the fuel nozzle assemblies on jet-in-crossflow mixing prior to channeling the fuel into the associated combustors; (d) providing swirler vane walls of fuel nozzle assemblies having predetermined porosity values that facilitate operation of gas turbine engines for different fuels requiring different flow rates; (e) providing swirler vane walls of fuel nozzle assemblies having predetermined porosity values that facilitate effective combustion of a wide range of fuels and fuel blends without maintenance outages to modify the fuel nozzle assemblies and the upstream conduits; (f) providing swirler vane walls of fuel nozzle assemblies having predetermined porosity values that facilitate controlling the effects of the varying characteristics of fuel injection into a gas turbine engine, i.e., making the characteristics of fuel injection more consistent to reduce effects induced by higher and lower differential pressures, varying viscosities, and pressure drops in the fuel flow paths; (g) providing swirler vane walls of fuel nozzle assemblies having predetermined porosity values that facilitate using the natural flow-restrictive features of the porous material to control the fuel flow rates by use of fuel control devices upstream of and external to a gas turbine engine to maintain the fuel backpressure within predetermined ranges for each fuel; and (h) providing swirler vane walls of fuel nozzle assemblies having predetermined porosity values that facilitate reducing effects of fuel flow imbalances, out-of-specification fuel flow, and out-of-tolerance distribution profiles.

Exemplary embodiments of fuel nozzle assemblies for gas turbine engines and methods for operating are described above in detail. The fuel nozzle assemblies and methods of operating such assemblies are not limited to the specific embodiments described herein, but rather, components of systems and/or steps of the methods may be utilized independently and separately from other components and/or steps described herein. For example, the methods may also be used in combination with other combustion systems and methods, and are not limited to practice with only the gas turbine systems and fuel nozzle assemblies and methods as described herein. Rather, the exemplary embodiment can be implemented and utilized in connection with many other combustion applications.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A fuel nozzle assembly (118) for use with a turbine engine (100), said fuel nozzle assembly comprising:
at least one fuel conduit (212,216) coupled to at least one fuel source; and
at least one swirler (222) comprising at least one wall (230) having a porous portion (234,236), said at least one wall coupled to said at least one fuel conduit, said porous portion formed from a material (300) having a porosity that facilitates fuel flow (246,248) therethrough, thereby defining at least one fuel flow path through said porous portion of said at least one wall.

2. The fuel nozzle assembly (118) in accordance with Claim 1, wherein the porosity of said porous portion (234,236) varies axially.

3. The fuel nozzle assembly (118) in accordance with Claim 1, wherein the porosity of said porous portion (234,236) varies radially.

4. The fuel nozzle assembly (118) in accordance with any of Claims 1 to 3, wherein said swirler (222) further comprises a plurality of vanes (224), wherein each vane of said plurality of vanes comprises said porous portion (234,236).

5. The fuel nozzle assembly (118) in accordance with Claim 4, wherein each vane (224) of said plurality of vanes comprises a plurality of walls (230) defining a vane cavity (232) therein, wherein each of said cavities is coupled to said at least one fuel conduit (216).

6. The fuel nozzle assembly (118) in accordance with Claim 5, wherein said plurality of walls (230) comprises a pair of opposing porous portions (234,236).

7. The fuel nozzle assembly (118) in accordance with Claim 6, wherein the porosity of said opposing porous portions (234,236) are substantially similar to each other.

8. The fuel nozzle assembly (118) in accordance with Claim 6 or 7, wherein said opposing porous portions (234,236) are configured to inject a plurality of fuel streams (246,248) into a corresponding air flow stream (242).

9. The fuel nozzle assembly (118) in accordance with any preceding Claim, wherein said porous portion (234,236) is at least one of:
a sintered ceramic; and
a sintered metal.

10. A gas turbine engine (100) comprising:
at least one combustor (116); and
at least one fuel nozzle assembly (118) coupled to said at least one combustor, said at least one fuel nozzle assembly as recited in any of claims 1 to 9.

11. A method of operating a turbine engine (100), the turbine engine including at least one fuel conduit (212,216) coupled to at least one fuel nozzle that includes at least one swirler (222) having at least one porous portion (234,236) formed from a material having a porosity that facilitates fuel flow therethrough, said method comprising:
channeling (502) a fuel from at least one fuel source to the at least one fuel conduit (212,216); and
channeling (504) the fuel through the at least one porous portion (234,236) into a combustor (116).

12. The method in accordance with Claim 11, further comprising:
transitioning (506) from a first fuel to a second fuel comprising:
channeling (508) the first fuel from a first fuel source, wherein the first fuel has a first set of characteristics;
channeling (510) the second fuel from a second fuel source, wherein the second fuel has a second set of characteristics;
decreasing (512) a fuel flow from the first fuel source;
increasing (514) a fuel flow from the second fuel source; and
maintaining (516) a power output of the turbine engine (100) substantially constant.

13. The method in accordance with Claim 12, wherein maintaining (516) a power output of the turbine engine (100) substantially constant comprises varying (518) a fuel injection rate at least partially as a function of the first set of fuel characteristics, the second set of fuel characteristics, and a porosity of the at least one porous portion (234,236).

14. The method of any of Claims 11 to 13, wherein channeling the fuel (504) through the at least one porous portion (224,236) into a combustor comprises injecting a plurality of fuel streams into a corresponding air flow stream through opposing porous portions.

15. The method of any of Claims 11 to 14, wherein channeling (504) the fuel through the at least one porous portion into a combustor comprises at least one of:
evenly distributing the fuel flow in an axial direction through the at least one porous portion (234,236) into an air flow stream; and
evenly distributing the fuel flow in a radial direction through the at least one porous portion (234,236) into an air flow stream.
